# EUROPEAN PATENT APPLICATION

(11) **EP 2 353 918 A1**
(43) Date of publication of application: **10.08.2011**
(21) Application number: 11150694.5
(22) Date of filing: 12.01.2011
(51) Int. Cl.: B60K 23/08, B60K 17/34, B60W 30/20, F16H 61/04

(54) **Driving force transmission apparatus and control method therefor**

(30) Priority: 13.01.2010 JP 2010005029; 11.06.2010 JP 2010133874
(71) Applicant: JTEKT CORPORATION, Osaka-shi Osaka 542-8502 (JP)
(72) Inventor: Yoshinami, Koudi, Osaka-shi, Osaka 542-8502 (JP); Sakai, Toshifumi, Osaka-shi, Osaka 542-8502 (JP); Ohno, Akihiro, Osaka-shi, Osaka 542-8502 (JP); Takuno, Hiroshi, Osaka-shi, Osaka 542-8502 (JP); Horaguchi, Masahiro, Osaka-shi, Osaka 542-8502 (JP); Mita, Masaki, Osaka-shi, Osaka 542-8502 (JP); Shigeta, Ryohei, Osaka-shi, Osaka 542-8502 (JP)
(74) Representative: TBK

(57) **Abstract**

A driving force transmission apparatus (1) includes: a propeller shaft (2) that receives driving force of an engine (102) from a front differential case (111) and transmits the driving force from a front wheel (104) side to a rear wheel (105a, 105b) side; a first driving force interruption unit (3) that connects/disconnects the propeller shaft (2) to/from the front differential case (111); a second driving force interruption unit (4) that connects/disconnects the propeller shaft (2) to/from at least one of the pair of rear wheels (105a, 105b) so that transmitted torque is variable; and an ECU (5) that controls connection and disconnection of the first and second driving force interruption unit (3,4). The ECU (5) causes the second driving force interruption unit (4) to connect/disconnect the propeller shaft (2) to/from the at least one of the pair of rear wheels (105a, 105b) before causing the first driving force interruption unit (3) to connect/disconnect the propeller shaft (2) to/from the front differential case (111).

## Description

### BACKGROUND OF THE INVENTION

### 1. Field of the Invention

The invention relates to a driving force transmission apparatus equipped for a four-wheel drive vehicle and a control method for the driving force transmission apparatus.

### 2. Description of the Related Art

There is known a driving force transmission apparatus equipped for a four-wheel drive vehicle that is able to shift from four-wheel drive to two-wheel drive or from two-wheel drive to four-wheel drive. The driving force transmission apparatus of this type is able to transmit or interrupt the diving force of a driving source to auxiliary driving wheels during two-wheel drive (for example, see Japanese Patent Application Publication No. 7-215081 (JP-A-7-215081)).

The driving force transmission apparatus described in JP-A-7-215081 includes a drive member connected to a differential case so as to be able to transmit driving force, a first friction clutch that is frictionally engaged when the drive member is driven, a second friction clutch that is arranged between a driven member connected to axle shafts of auxiliary driving wheels so at to be able to transmit driving force and a side gear shaft of a differential, and cam means that actuates the first friction clutch to press the second friction clutch. The driving force transmission apparatus automatically connects the side gear shaft to the axles during four-wheel drive, and automatically interrupts the side gear shaft from the axles during two-wheel drive.

However, the driving force transmission apparatus described in JP-A-7-215081 is just driven by the driving force of a propeller shaft and is not able to control the timing at which the driving force is transmitted or interrupted or the amount of transmitted driving force. Thus, depending on a configuration that a driving force interruption unit is arranged at an upstream side of a driving force transmission path with respect to the propeller shaft, shock or vibration may occur at the time of shifting between a four-wheel drive state and a two-wheel drive state.

In addition, there is a four-wheel drive vehicle that is configured to interrupt an input side of a propeller shaft from an output side thereof so as not to rotate the propeller shaft during running in a two-wheel drive state in order to reduce a power loss due to rotation of the propeller shaft in the two-wheel drive state (for example, see Japanese Patent Application Publication No. 2003-220847 (JP-A-2003-220847)).

The four-wheel drive vehicle described in JP-A-2003-220847 includes a transfer clutch located on a torque transmission upstream side of a front propeller shaft and an ADD mechanism (interruption mechanism) located on a torque transmission downstream side of the front propeller shaft. When shifting from a two-wheel drive state where both the transfer clutch and the ADD mechanism are released into a four-wheel drive state, the transfer clutch is connected by torque used to rotate the propeller shaft, and, after that, synchronization of the ADD mechanism is checked and then the ADD mechanism is changed from a disconnected state to a locked state.

However, in the four-wheel drive vehicle described in JP-A-2003-220847, because synchronization of the ADD mechanism is checked and then the ADD mechanism is changed to a locked state, it may take time for shifting into a four-wheel drive state. In addition, if the ADD mechanism is changed to a locked state in a state where the ADD mechanism is not completely synchronized, shock or vibration may occur.

### SUMMARY OF THE INVENTION

The invention provides a driving force transmission apparatus that is able to suppress shock or vibration at the time of shifting between a four-wheel drive state and a two-wheel drive state, and a control method for the driving force transmission apparatus. In addition, the invention further provides a driving force transmission apparatus that able to suppress shock or vibration at the time of shifting from a two-wheel drive state of a four-wheel drive vehicle to a four-wheel drive state while reducing a time required to shift into the four-wheel drive state, and a control method for the driving force transmission apparatus.

A first aspect of the invention relates to a driving force transmission apparatus. The driving force transmission apparatus includes: a driving force transmission shaft that receives driving force of a driving source from a rotating member and that transmits the driving force from a side of main driving wheels to a side of auxiliary driving wheels; first driving force interruption means for connecting or disconnecting the driving force transmission shaft to or from the rotating member and that is arranged on the main driving wheels side of the driving force transmission shaft; second driving force interruption means for connecting or disconnecting the driving force transmission shaft to or from at least one of the pair of auxiliary driving wheels so as to variably transmit torque between the driving force transmission shaft and the at least one of the pair of auxiliary driving wheels and that is arranged on the auxiliary driving wheels side of the driving force transmission shaft; and control means for controlling connection and disconnection of the first driving force interruption means and second driving force interruption means. The control means causes the second driving force interruption means to connect the driving force transmission shaft to the at least one of the auxiliary driving wheels before causing the first driving force interruption means to connect the driving force transmission shaft to the rotating member, and causes the second driving force interruption means to disconnect the driving force transmission shaft from the at least one of the auxiliary driving wheels before causing the first driving force interruption means to disconnect the driving force transmission shaft from the rotating member.

According to the above aspect, when the first driving force interruption means and the second driving force interruption means that is able to vary transmitted torque are controlled to shift between four-wheel drive and two-wheel drive, connection or disconnection of the second driving force interruption means is carried out before connection or disconnection of the first driving force interruption means.

In the above aspect, the second driving force interruption means may include a first interruption element that is connected to the driving force transmission shaft via a differential mechanism and a second interruption element that is connected to one of the auxiliary driving wheels. The first interruption element and the second interruption element may be connected or disconnected to connect or disconnect the driving force transmission shaft to or from the at least one of the pair of auxiliary driving wheels.

According to the above aspect, the second driving force interruption means is able to connect or disconnect the differential mechanism to or from the at least one of the auxiliary driving wheels.

In the above aspect, the second driving force interruption means may include a first interruption element that is connected to the driving force transmission shaft and a second interruption element that is connected to the pair of auxiliary driving wheels. The first interruption element and the second interruption element may be connected or disconnected to connect or disconnect the driving force transmission shaft to or from the at least one of the pair of auxiliary driving wheels.

According to the above aspect, the second driving force interruption means is able to connect or disconnect the driving force transmission shaft to or from the differential mechanism.

In the above aspect, the control means may cause the first driving force interruption means to connect the driving force transmission shaft to the rotating member when a difference between the rotational speed of the rotating member and the rotational speed of the driving force transmission shaft is smaller than or equal to a predetermined threshold.

In the above aspect, the control means may cause the first driving force interruption means to connect the driving force transmission shaft to the rotating member when a ratio between the rotational speed of the rotating member and the rotational speed of the driving force transmission shaft is higher than or equal to a predetermined threshold.

In the above aspect, the control means may increase torque transmitted by the second driving force interruption means to increase the rotational speed of the driving force transmission shaft to a predetermined rotational speed and then may reduce the torque transmitted by the second driving force interruption means, and the control means may cause the first driving force interruption means to connect the driving force transmission shaft to the rotating member when the transmitted torque is reduced to a predetermined torque.

According to the above aspect, the first driving force interruption means connects the driving source to the driving force transmission shaft in a state where connection between the driving force transmission shaft and the at least one of the auxiliary driving wheels is loosened.

A second aspect of the invention relates to a control method for controlling a driving force transmission apparatus that includes a driving force transmission shaft that receives driving force of a driving source from a rotating member and that transmits the driving force from a side of main driving wheels to a side of auxiliary driving wheels, first driving force interruption means for connecting or disconnecting the driving force transmission shaft to or from the rotating member and that is arranged on the main driving wheels side of the driving force transmission shaft, and second driving force interruption means for connecting or disconnecting the driving force transmission shaft to or from at least one of the pair of auxiliary driving wheels so as to variably transmit torque between the driving force transmission shaft and the at least one of the pair of auxiliary driving wheels and that is arranged on the auxiliary driving wheels side of the driving force transmission shaft. The control method includes: causing the second driving force interruption means to connect the driving force transmission shaft to the rotating member before causing the first driving force interruption means to connect the driving force transmission shaft to the at least one of the pair of auxiliary driving wheels, and causing the second driving force interruption means to disconnect the driving force transmission shaft from the rotating member before causing the first driving force interruption means to disconnect the driving force transmission shaft from the at least one of the pair of auxiliary driving wheels.

According to the above aspect, when the first driving force interruption means and the second driving force interruption means that is able to vary transmitted torque are controlled to shift between four-wheel drive and two-wheel drive, connection or disconnection of the second driving force interruption means is carried out before connection or disconnection of the first driving force interruption means.

In the above aspect, the first driving force interruption means may be caused to connect the driving force transmission shaft to the rotating member when a difference between the rotational speed of the rotating member and the rotational speed of the driving force transmission shaft is smaller than or equal to a predetermined threshold.

In the above aspect, the first driving force interruption means may be caused to connect the driving force transmission shaft to the rotating member when a ratio between the rotational speed of the rotating member and the rotational speed of the driving force transmission shaft is higher than or equal to a predetermined threshold.

In the above aspect, torque transmitted by the second driving force interruption means may be increased to increase the rotational speed of the driving force transmission shaft to a predetermined rotational speed and then the torque transmitted by the second driving force interruption means may be reduced, and the first driving force interruption means may be caused to connect the driving force transmission shaft to the rotating member when the transmitted torque is reduced to a predetermined torque.

According to the above aspects, it is possible to suppress shock or vibration at the time of shifting between a four-wheel drive state and a two-wheel drive state. In addition, it is possible to suppress shock or vibration at the time of shifting from a two-wheel drive state of a four-wheel drive vehicle to a four-wheel drive state while reducing a time required to shift into the four-wheel drive state.

### BRIEF DESCRIPTION OF DRAWINGS

The features, advantages, and technical and industrial significance of this invention will be described below with reference to the accompanying drawings, in which like numerals denote like elements, and wherein:
FIG. 1 is a plan view for illustrating the outline of a vehicle equipped with a driving force transmission apparatus according to a first embodiment of the invention;
FIG. 2 is a sectional view for illustrating a relevant portion of the driving force transmission apparatus according to the first embodiment of the invention;
FIG. 3 is a plan view for illustrating the outline of a vehicle equipped with a driving force transmission apparatus according to a second embodiment of the invention;
FIG. 4 is a sectional view for illustrating a relevant portion of the driving force transmission apparatus according to the second embodiment of the invention;
FIG. 5A and FIG. 5B are sectional views for illustrating a relevant portion of a dog clutch according to a third embodiment of the invention;
FIG. 6 is a flowchart for illustrating control procedure according to the third embodiment of the invention; and
FIG. 7A to FIG. 7D are graphs for illustrating an operation example according to the third embodiment of the invention.

### DETAILED DESCRIPTION OF EMBODIMENTS

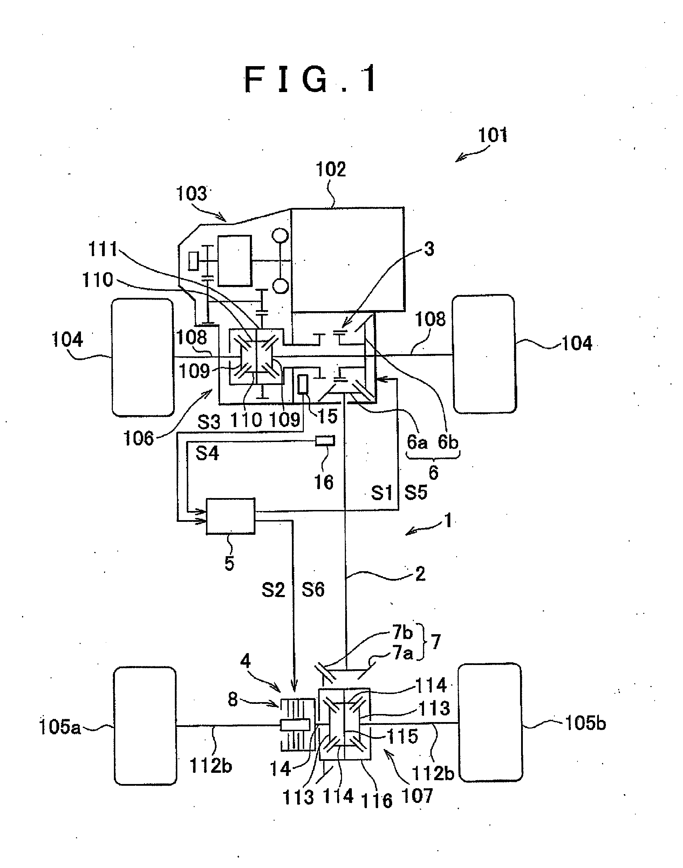

FIG. 1 shows the outline of a four-wheel drive vehicle 101 according to a first embodiment. As shown in FIG.1, the four-wheel drive vehicle 101 includes a driving force transmission apparatus 1, an engine 102, a transmission 103, a pair of front wheels 104 that serve as main driving wheels and a pair of rear wheels 105a and 105b that serve as auxiliary driving wheels.

The driving force transmission apparatus 1 is arranged together with a front differential 106 and a rear differential 107 in a driving force transmission path from the transmission 103 to the rear wheels in the four-wheel drive vehicle 101, and is mounted on a vehicle body (not shown) of the four-wheel drive vehicle 101.

Then, the driving force transmission apparatus 1 includes a propeller shaft.(driving force transmission shaft) 2, a first driving force interruption unit 3 and a second driving force interruption unit 4, and shifts the four-wheel drive vehicle 101 from four-wheel drive to two-wheel drive or from two-wheel drive to four-wheel drive.

The front differential 106 includes a pair of side gears 109 connected to front wheel axle shafts 108, a pair of pinion gears 110 that are in mesh with the pair of side gears 109 so that the gear axes are perpendicular to the gear axes of the side gears 109, and a front differential case 111 that accommodates the pair of side gears 109. The front differential 106 is arranged between the transmission 103 and the first driving force interruption unit 3.

The rear differential 107 includes a pair of side gears 113 connected to rear wheel axle shafts 112, a pair of pinion gears 114 that are in mesh with the pair of side gears 113 so that the gears axes are perpendicular to the gear axes of the side gears 113, a pinion gear support member 115 that supports the pair of pinion gears 114, and a rear differential case 116 that accommodates the pinion gear support member 115, the pair of pinion gears 114 and the pair of side gears 113. The rear differential 107 is arranged between the propeller shaft 2 and the second driving force interruption unit 4. A side gear shaft 14 is connected to the left side gear 113 of the pair of side gears 113 so that the side gear shaft 14 is relatively non-rotatable.

The engine 102 outputs driving force to the pair of front wheel axle shafts 108 via the transmission 103 and the front differential 106 to thereby drive the pair of front wheels 104.

The engine 102 outputs driving force to the left rear wheel axle shaft 112a via the transmission 103, the first driving force interruption unit 3, the propeller shaft 2, the rear differential 107, the side gear shaft 14 and the second driving force interruption unit 4 to thereby drive the left rear wheel 105a. In addition, the engine 102 outputs driving force to the right rear wheel axle shaft 112b via the transmission 103, the first driving force interruption unit 3, the propeller shaft 2 and the rear differential 107 to thereby drive the right rear wheel 105b.

As shown in FIG. 1, the driving force transmission apparatus 1 roughly includes the propeller shaft 2, the first driving force interruption unit 3, the second driving force interruption unit 4 and a vehicle electronic control unit (ECU) 5 that serves as a control unit.

The propeller shaft 2 is arranged between the first driving force interruption unit 3 and the second driving force interruption unit 4. Then, the propeller shaft 2 receives the driving force of the engine 102 from the front differential case 111 and then transmits the driving force from the side of the front wheels 104 to the side of the rear wheels 105a and 105b. A front wheel side gear mechanism 6 is arranged at a front wheel side end of the propeller shaft 2. The front wheel side gear mechanism 6 is formed of a drive pinion 6a and a ring gear 6b that are in mesh with each other. A gear mechanism 7 is arranged at a rear wheel side end of the propeller shaft 2. The gear mechanism 7 is formed of a drive pinion 7a and a ring gear 7b that are in mesh with each other.

The first driving force interruption unit 3 is, for example, formed of a dog clutch. The first driving force interruption unit 3 is arranged at the side of the front wheels 104 in the four-wheel drive vehicle 101, and is connected to the ECU 5 via an actuator (not shown). Then, the first driving force interruption unit 3 connects or disconnects the propeller shaft 2 to or from the front differential case 111.

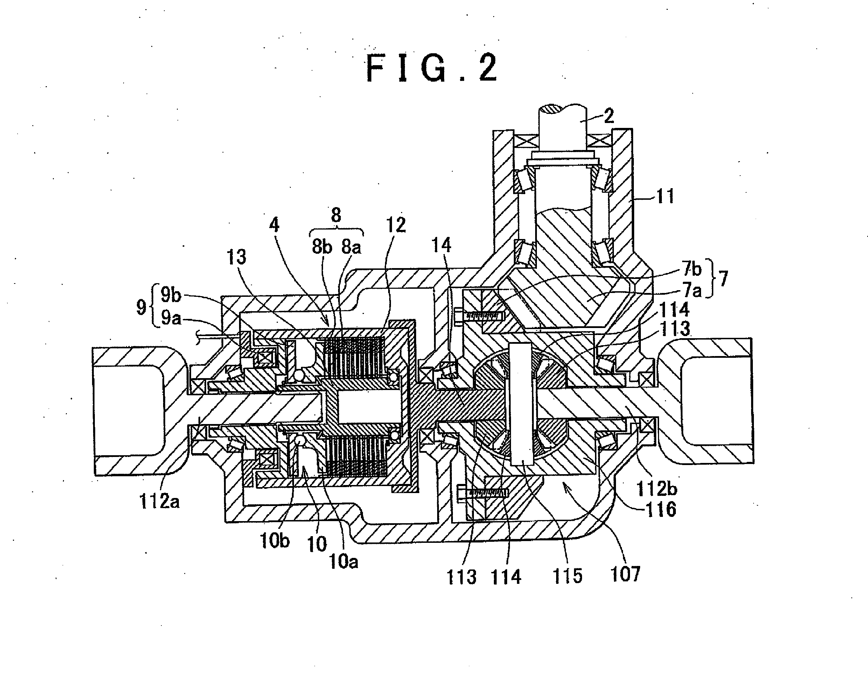

FIG. 2 shows the second driving force interruption unit 4. As shown in FIG. 2, the second driving force interruption unit 4 is, for example, formed of a combined clutch that includes a multiple disk clutch 8, an electromagnetic clutch 9 and a cam mechanism 10. The second driving force interruption unit 4 is arranged at the side of the rear wheel 105a in the four-wheel drive vehicle 101, and is accommodated in a differential carrier 11.

Then, the second driving force interruption unit 4 connects or disconnects the side gear shaft 14 to or from the left rear wheel axle shaft 112a.

That is, when the second driving force interruption unit 4 is connected, torque is transmitted from the propeller shaft 2 to the left rear wheel axle shaft 112a via the gear mechanism 7, the rear differential 107 and the side gear shaft 14. In addition, torque is transmitted from the propeller shaft 2 to the right rear wheel axle shaft 112b via the gear mechanism 7 and the rear differential 107.

On the other hand, when the second driving force interruption unit 4 is disconnected, the left rear wheel axle shaft 112a is disconnected from the propeller shaft 2, and; accordingly, torque is not transmitted from the propeller shaft 2 to the right rear wheel axle shaft 112b as well. Note that the reason why torque is not transmitted to the right rear wheel axle shaft 112b as well is due to the characteristic of a general differential device, that is, when one of the side gears rotates at an idle, torque is not transmitted to the other one of the side gears as well.

The multiple disk clutch 8 is formed of a friction main clutch that includes a plurality of inner clutch plates 8a and a plurality of outer clutch plates 8b, and is arranged between a housing 12 that serves as a first interruption element and an inner shaft 13 that serves as a second interruption element. Then, the multiple disk clutch 8 frictionally engages the adjacent inner and outer clutch plates among the inner clutch plates 8a and the outer clutch plates 8b or releases the frictional engagement to thereby connect or disconnect the housing 12 to or from the inner shaft 13.

The housing 12 is connected to the side gear shaft 14 by, for example, spline fitting so as to be relatively non-rotatable, and is supported inside the differential carrier 11 so as to be rotatable about an axis of the left rear wheel axle shaft 112a. The inner shaft 13 is arranged on a radially inner side of the housing 12, and is connected to the rear wheel axle shaft 112 by, for example, spline fitting so as to be relatively non-rotatable.

The electromagnetic clutch 9 has a coil 9a and an armature cam 9b, and is arranged along the rotation axis of the housing 12. Then, the electromagnetic clutch 9 moves the armature cam 9b toward the coil 9a by electromagnetic force generated by the coil 9a to thereby connect the armature cam 9b to the housing 12.

The cam mechanism 10 includes the armature cam 9b that serves as a cam member. The cam mechanism 10 has a main cam 10a and a cam follower 10b, and is accommodated inside the housing 12. The main cam 10a is arranged next to the armature cam 9b along the rotation axis of the housing 12. The cam follower 10b is interposed between the main cam 10a and the armature cam 9b. Then, in the cam mechanism 10, the armature cam 9b receives rotational force from the housing 12.as the coil 9a is supplied with current and then converts the rotational force to pressing force that becomes clutch force of the multiple disk clutch 8. As the amount of current supplied to the coil 9a increases, friction force between the armature cam 9b and the housing 12 increases, and the main cam 10a further strongly presses the multiple disk clutch 8. That is, force pressing the multiple disk clutch 8 is controllable in accordance with the amount of current supplied to the coil 9a, and torque transmitted to the second driving force interruption unit 4 is variable in accordance with the amount of current supplied to the coil 9a.

As shown in FIG.1, the ECU 5 is mounted on the vehicle body of the four-wheel drive vehicle 101, and is connected to the actuator of the first driving force interruption unit 3 and the electromagnetic clutch 9 of the second driving force interruption unit 4. A rotation sensor 15 and a rotation sensor 16 are connected to the ECU 5. The rotation sensor 15 detects the rotational speed of the front differential case 111. The rotation sensor 16 detects the rotational speed of the propeller shaft 2.

Then, the ECU 5 inputs an output signal S3 from the rotation sensor 15 and an output signal S4 from the rotation sensor 16 at the time of shifting from two-wheel drive to four-wheel drive during running of the four-wheel drive vehicle 101. In addition, the ECU 5 outputs control signals S1 and S2 respectively to the actuator of the first driving force interruption unit 3 and the electromagnetic clutch 9 of the second driving force interruption unit 4. The control signals S1 and S2 are used to connect the second driving force interruption unit 4 before connection of the first driving force interruption unit 3.

During two-wheel drive running, the first driving force interruption unit 3 and the second driving force interruption unit 4 are disconnected, so the propeller shaft 2 does not rotate. However, in this case, as the four-wheel drive vehicle 101 runs, the rear wheels 105a and 105b rotate as driven wheels. Here, when the amount of current supplied to the coil 9a is gradually increased to connect the second driving force interruption unit 4, the rotational torque of the rear wheels 105a and 105b is transmitted to the propeller shaft 2, so the propeller shaft 2 rotates. Subsequently, the rotational speed of the front differential case 111 is detected by the rotation sensor 15, and the rotational speed of the propeller shaft 2 is detected by the rotation sensor 16, When the ECU 5 determines that the difference between the rotational speed of the front differential case 111 and the rotational speed of the propeller shaft 2 is smaller than or equal to a predetermined threshold, the first driving force interruption unit 3 is connected. Note that the percentage of an increase in the amount of current supplied to the coil 9a is appropriately set to an extent such that an occupant does not experience shock or vibration.

By so doing, the propeller shaft 2 may be connected to the front differential case 111 in such a manner that the propeller shaft 2 is rotated to reduce the difference in rotational speed between the propeller shaft 2 and the front differential case 111. Thus, the four-wheel drive vehicle 101 smoothly shifts from two-wheel drive to four-wheel drive during running.

In addition, the ECU 5 outputs control signals S5 and S6 respectively to the actuator of the first driving force interruption unit 3 and the electromagnetic clutch 9 of the second driving force interruption unit 4 so as to disconnect the second driving force interruption unit 4 before disconnection of the first driving force interruption unit 3 when the four-wheel drive vehicle 101 shifts from four-wheel drive to two-wheel drive during running.

At the time of shifting from four-wheel drive to two-wheel drive, when the amount of current supplied to the coil 9a is gradually reduced to disconnect the second driving force interruption unit 4, torque transmitted from the propeller shaft 2 to the rear wheel axle shafts 105a and 105b is interrupted. By so doing, torsion of the propeller shaft 2, which has occurred during transmission of torque, is released. After that, the first driving force interruption unit 3 is disconnected. Note that the percentage of a reduction in the amount of current supplied to the coil 9a is appropriately set to an extent such that an occupant does not experience shock or vibration.

By so doing, when the four-wheel drive vehicle 101 shifts from four-wheel drive to two-wheel drive, the propeller shaft 2 may be disconnected from the front differential case 111 so that a load resulting from the torsion of the propeller shaft 2 does not act on the front differential case 111. Thus, the four-wheel drive vehicle 101 smoothly shifts from four-wheel drive to two-wheel drive during running.

Next, the operation of the driving force transmission apparatus according to the first embodiment will be described with reference to FIG. 1 and FIG. 2.

For example, in the case of steady running in which the four-wheel drive vehicle 101 travels straight ahead at a constant speed, the ECU 5 disconnects the first driving force interruption unit 3 and the second driving force interruption unit 4 in order to improve fuel economy by reducing running resistance. In this case, the propeller shaft 2 is not rotated, the driving force of the engine 102 is transmitted to the front differential 106 via the transmission 103, and further transmitted from the front differential 106 to the pair of front wheels 104 via the pair of front wheel axle shafts 108.

In this case, because the coil 9a of the electromagnetic clutch 9 in the second driving force interruption unit 4 is not supplied with current, no magnetic circuit is formed in the coil 9a, and the armature cam 9b does not move toward the coil 9a to be connected to the housing 12, Thus, because no pressing force that becomes clutch force of the multiple disk clutch 8 is generated in the cam mechanism 10, the inner clutch plates 8a and outer clutch plates 8b of the multiple disk clutch 8 do not frictionally engage each other.

When the four-wheel drive vehicle 101 is shifted from two-wheel drive to four-wheel drive, the second driving force interruption unit 4 is initially used to connect the propeller shaft 2 to the pair of rear wheel axle shafts 112a and 112b and then the first driving force interruption unit 3 is used to connect the front differential case 111 1 to the propeller shaft 2. At this time, the ECU 5 inputs the output signal S3 from the rotation sensor 15 and the output signal S4 from the rotation sensor 16, and, after the difference in rotational speed, indicated by both output signals, is smaller than or equal to a predetermined threshold, the ECU 5 outputs the control signal S1 to the actuator of the first driving force interruption unit 3.

The driving force of the engine 102 is transmitted to the propeller shaft 2 via the transmission 103, the front differential case 111, the first driving force interruption unit 3 and the gear mechanism 6, and further transmitted from the propeller shaft 2 to the rear wheels 105a and 105b via the gear mechanism 7, the rear differential 107 and the rear wheel axle shafts 112a and 112b.

When the ECU 5 outputs the control signal S2 to supply current to the coil 9a, a magnetic circuit is formed in the coil 9a, and the armature cam 9b moves in a direction to be connected to the housing 12. Therefore, the armature cam 9b frictionally slides on the housing 12, and the rotational force of the housing 12 is transmitted to the armature cam 9b.

The rotational force of the armature cam 9b is converted to pressing force that becomes the clutch force of the multiple disk clutch 8 by cam action of the cam mechanism 10, and the main cam 10a moves by the pressing force in a direction to frictionally engage the inner and outer clutch plates of the multiple disk clutch 8 with each other.

Then, the inner and outer clutch plates of the multiple disk clutch 8 are frictionally engaged with each other, so the housing 12 is connected to the inner shaft 13 3 so that torque is transmittable.

Note that, in four-wheel drive, the pressing force of the multiple disk clutch 8 may be adjusted by increasing or reducing the amount of current supplied to the coil 9a, so the amount of torque transmitted to the rear wheels 105a and 105b may be controlled. That is, the ECU 5 increases or reduces the amount of current supplied to the coil 9a on the basis of a vehicle running state, such as a wheel speed of each wheel and a steering angle, to thereby make it possible to control the distribution of driving force between the front wheels 104 and 104 and the rear wheels 105a and 105b.

On the other hand, when the four-wheel drive vehicle 101 shifts from four-wheel drive to two-wheel drive, the second driving force interruption unit 4 is initially used to disconnect one of the rear wheel axle shafts 112 from the propeller shaft 2, and then the first driving force interruption unit 3 is used to disconnect the propeller shaft 2 from the front differential case 111. At this time, the ECU 5 outputs the control signal S6 to the electromagnetic clutch 9 of the second driving force interruption unit 22, and outputs the control signal S5 to the actuator of the first driving force interruption unit 3.

No rotation driving force of the engine 102 is transmitted to the propeller shaft 2 via the transmission 103, the front differential case 111, the first driving force interruption unit 3 and the gear mechanism 6.

According to the above described first embodiment, the following advantageous effects may be obtained.

The four-wheel drive vehicle 101 is able to smoothly shift from four-wheel drive to two-wheel drive and shift from two-wheel drive to four-wheel drive.

The second driving force interruption unit 4 is able to adjust the pressing force of the multiple disk clutch 8 by the amount of current supplied to the coil 9a so the amount of supplied current is gradually increased or reduced at the time of shifting between four-wheel drive and two-wheel drive to thereby make it possible to further suppress shock or vibration at the time of shifting.

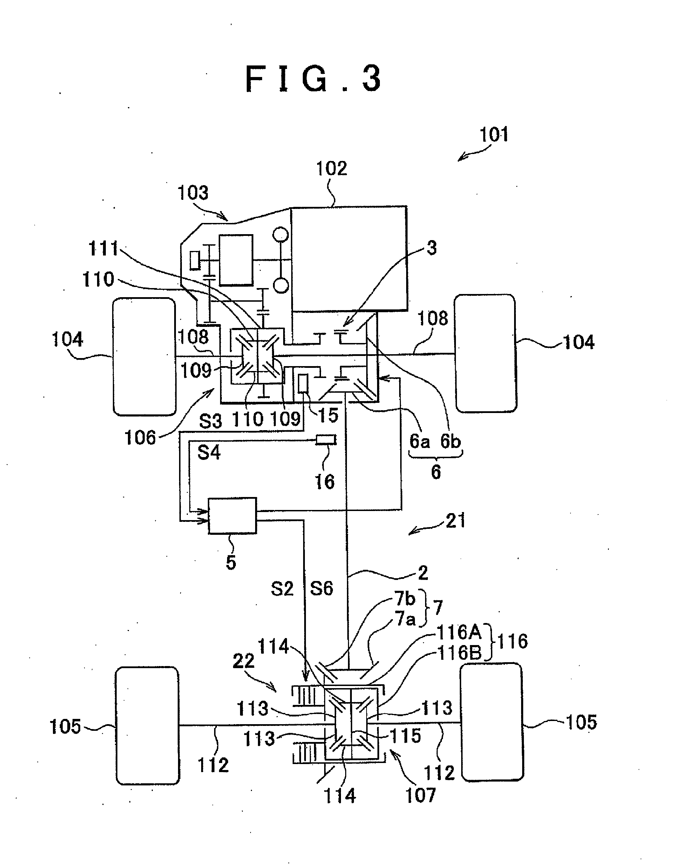

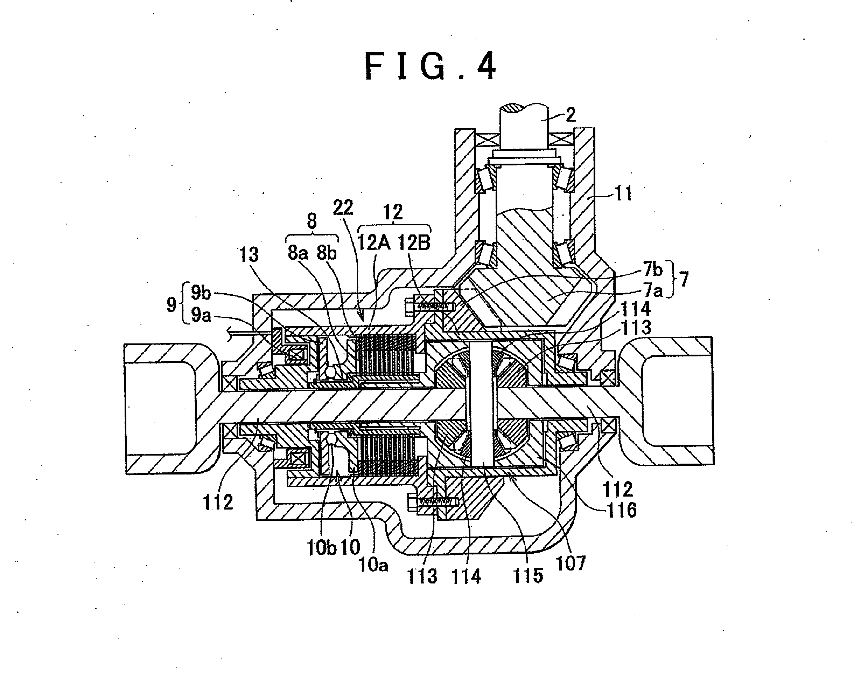

Next, a driving force transmission apparatus 21 according to a second embodiment of the invention will be described with reference to FIG. 3 and FIG. 4. FIG. 3 shows the outline of the four-wheel drive vehicle 101. FIG. 4 shows a second driving force interruption unit. In FIG. 3 and FIG. 4, like reference numerals denote the same or equivalent components to those in FIG. 1 and FIG 2, and the detailed description is omitted.

As shown in FIG. 3 and FIG. 4, the driving force transmission apparatus 21 according to the second embodiment of the invention includes a second driving force interruption unit 22 at the side of rear wheels. The second driving force interruption unit 22 includes a housing 12 that serves as a first interruption element connected to a propeller shaft 2 via a gear mechanism 7 and an inner shaft 13 that serves as a second interruption element connected to the pair of rear wheels 105 via a pair of rear wheel axle shafts 112 and a rear differential 107.

The housing 12 is formed of a first housing element 12A and a second housing element 12B, and is fixed to a ring gear 7b of the gear mechanism 7. The first housing element 12A accommodates a multiple disk clutch 8, an electromagnetic clutch 9 and a cam mechanism 10. The second housing element 12B accommodates the rear differential 107. The inner shaft 13 is connected to a rear differential case 116 by spline fitting so as to be relatively non-rotatable. In addition, in the rear differential 107, a pair of side gears 113 are respectively connected to the rear wheel axle shafts 112 by spline fitting.

Next, the operation of the driving force transmission apparatus according to the second embodiment will be described with reference to FIG. 3 and FIG. 4.

For example, in the case of steady running in which the four-wheel drive vehicle 101 travels straight ahead at a constant speed, the ECU 5 disconnects the first driving force interruption unit 3 and the second driving force interruption unit 22 in order to improve fuel economy by reducing running resistance. In this case, the propeller shaft 2 is not rotated, the driving force of the engine 102 is transmitted to the front differential 106 via the transmission 103, and further transmitted from the front differential 106 to the pair of front wheels 104 via the pair of front wheel axle shafts 108.

In this case, because the coil 9a of the electromagnetic clutch 9 in the second driving force interruption unit 22 is not supplied with current, no magnetic circuit is formed in the coil 9a, and the armature cam 9b does not move toward the coil 9a to be connected to the housing 12. Thus, because no pressing force that becomes clutch force of the multiple disk clutch 8 is generated in the cam mechanism 10, the inner clutch plates 8a and outer clutch plates 8b of the multiple disk clutch 8 do not frictionally engage each other.

When the four-wheel drive vehicle 101 shifts from two-wheel drive to four-wheel drive, the second driving force interruption unit 22 is initially used to connect the propeller shaft 2 to the rear wheel axle shafts 112, and then the first driving force interruption unit 3 is used to connect the front differential case 111 to the propeller shaft 2. At this time, the ECU 5 inputs the output signal S3 from the rotation sensor 15 and the output signal S4 from the rotation sensor 16, and, after the difference in rotational speed, indicated by both output signals, is smaller than or equal to a predetermined threshold, the ECU 5 outputs the control signal S1 to the actuator of the first driving force interruption unit 3.

The rotation driving force of the engine 102 is transmitted to the propeller shaft 2 via the transmission 103, the front differential case 111, the first driving force interruption unit 3 and the gear mechanism 6, and further transmitted from the propeller shaft 2 to the rear wheels 105 via the gear mechanism 7, the rear differential 107 and the rear wheel axle shafts 112.

When the ECU 5 outputs the control signal S2 to supply current to the coil 9a, a magnetic circuit is formed in the coil 9a, and the armature cam 9b moves in a direction to be connected to the housing 12. Therefore, the armature cam 9b frictionally slides on the housing 12, and the rotational force of the housing 12 is transmitted to the armature cam 9b.

The rotational force of the armature cam 9b is converted to pressing force that becomes the clutch force of the multiple disk clutch 8 by cam action of the cam mechanism 10, and the main cam 10a moves by the pressing force in a direction to frictionally engage the inner and outer clutch plates of the multiple disk clutch 8 with each other.

Then, the inner and outer clutch plates of the multiple disk clutch 8 are frictionally engaged with each other, so the housing 12 is connected to the inner shaft 13 3 so that torque is transmittable. By so doing, the propeller shaft 2 is connected to the rear differential case 116 of the rear differential 107 so that torque is transmittable.

Note that, in four-wheel drive, the pressing force of the multiple disk clutch 8 may be adjusted by increasing or reducing the amount of current supplied to the coil 9a, and the amount of torque transmitted to the rear wheels 105 may be controlled. That is, the ECU 5 increases or reduces the amount of current supplied to the coil 9a on the basis of a vehicle running state, such as a wheel speed of each wheel and a steering. angle, to thereby make it possible to control the distribution of driving force between the front wheels 104 and the rear wheels 105.

On the other hand, when the four-wheel drive vehicle 101 shifts from four-wheel drive to two-wheel drive, the second driving force interruption unit 22 is initially used to disconnect the rear wheel axle shafts 112 from the propeller shaft 2, and then the first driving force interruption unit 3 is used to disconnect the propeller shaft 2 from the front differential case 111. At this time, the ECU 5 outputs the control signal S6 to the electromagnetic clutch 9 of the second driving force interruption unit 22, and outputs the control signal S5 to the actuator of the first driving force interruption unit 3.

The rotation driving force of the engine 102 is not transmitted to the propeller shaft 2 via the transmission 103, the front differential case 111, the first driving force interruption unit 3 and the gear mechanism 6.

According to the above described second embodiment, the same advantageous effects as those of the first embodiment may be obtained.

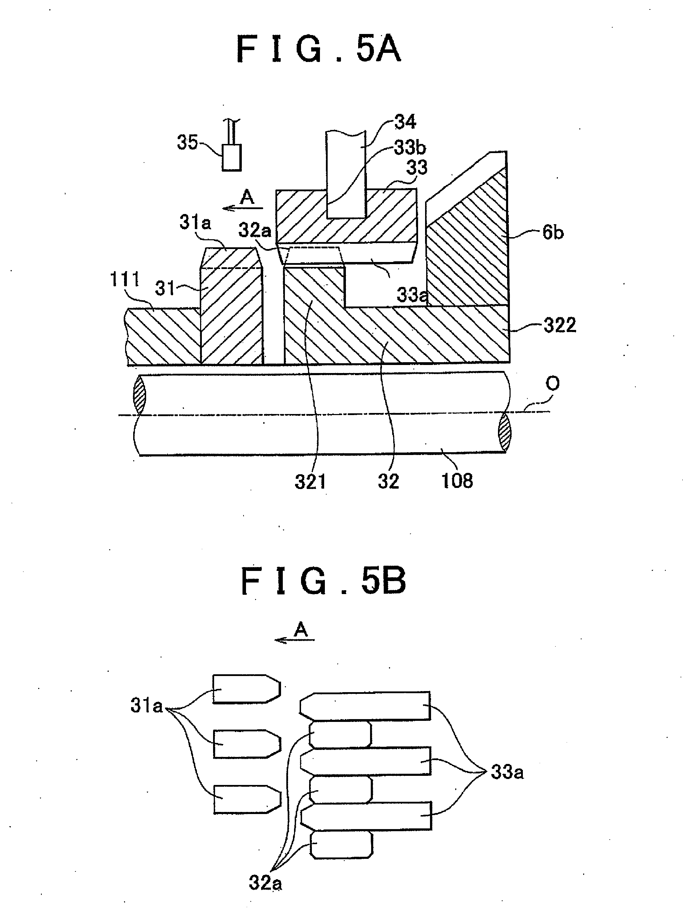

Next, the operation of a driving force transmission apparatus according to a third embodiment will be described with reference to FIG. 5A to FIG. 7.

FIG. 5A and FIG. 5B are sectional views that show an example of the schematic configuration of a first driving force interruption unit 3. The first driving force interruption unit 3 includes a first rotating member 31, a second rotating member 32 and a sleeve 33. The first rotating member 31 is fixed to an end of the front differential case 111. The second rotating member 32 is relatively rotatable coaxially with the first rotating member 31. The sleeve 33 is movable in the axial direction around the first rotating member 31 and the second rotating member 32.

The first rotating member 31 has an annular shape such that the front wheel axle shaft 108 is inserted. The first rotating member,31 is, for example, fixed to an end of the front differential case 111 by bolt fastening, and integrally rotates with the front differential case 111. A plurality of mesh teeth 31a are formed on the outer periphery of the first rotating member 31.

The second rotating member 32 has a cylindrical shape such that one axial end 321 adjacent to a side facing the first rotating member 31 is radially enlarged, and the front wheel axle shaft 108 extends through the center of the second rotating member 32. A plurality of mesh teeth 32a are formed on the outer periphery of the end 321 of the second rotating member 32. A ring gear 6b is fixed to the outer periphery of the other axial end 322 of the second rotating member 32 by, for example, bolt fastening so as to be relatively non-rotatable.

The second rotating member 32 and the front differential case 111 are supported by a vehicle body via bearings (not shown) independently of each other so as to be rotatable and axially immovable.

The sleeve 33 has an annular shape. A plurality of mesh teeth 33a are formed on the inner peripheral surface of the sleeve 33. The mesh teeth 33a are constantly in mesh with the plurality of mesh teeth 32a of the second rotating member 32, and are also able to be in mesh with the plurality of mesh teeth 31a of the first rotating member 31 as the sleeve 33 axially moves along a rotation axis O of the front wheel axle shaft 108. In addition, an annular groove 33b is formed on the outer peripheral side of the sleeve 33, and a fork 34 is slidably fitted in the groove 33b. The fork 34 is moved forward or backward in an arrow A direction by an actuator (not shown) together with the sleeve 33.

A proximity sensor 35 is arranged at a location facing the first rotating member 31. The proximity sensor 35 is fitted to the vehicle body. The proximity sensor 35 is, for example, of a high-frequency oscillation type. As the sleeve 33 moves toward the first rotating member 31 (arrow A direction) and then the mesh teeth 31a are in mesh with the mesh teeth 33a, the proximity sensor 35 outputs an on signal. The output signal from the proximity sensor 35 is transferred to the ECU 5 through wiring (not shown).

FIG. 5B is a schematic view that shows an example of a mesh state among the plurality of mesh teeth 31a of the first rotating member 31, the plurality of mesh teeth 32a of the second rotating member 32 and the plurality of mesh teeth 33a of the sleeve 33. In the state shown in the drawing, the plurality of mesh teeth 32a of the second rotating member 32 are in mesh with the plurality of mesh teeth 33a of the sleeve 33; however, the plurality of mesh teeth 31a of the first rotating member 31 are not in mesh with the plurality of mesh teeth 33a of the sleeve 33. Thus, the first driving force interruption unit 3 is in a released state such that the first rotating member 31 is allowed to rotate relative to the second rotating member 32, and the front differential case 111 is disconnected from the propeller shaft 2.

In addition, as the sleeve 33 moves in the arrow A direction from this state, the mesh teeth 33a of the sleeve 33 enter between the adjacent mesh teeth 31a of the first rotating member 31, so the mesh teeth 31a are in mesh with the mesh teeth 33a to enter an engaged state. In this engaged state, the plurality of mesh teeth 33a of the sleeve 33 are in mesh with the plurality of mesh teeth 31 a of the first rotating member 31 1 and the plurality of mesh teeth 32a of the second rotating member 32, so relative rotation between the first rotating member 31 and the second rotating member 32 is disabled. Thus, the front differential case 111 is connected to the propeller shaft 2 so that torque is transmittable_{.}

In the third embodiment, when the vehicle shifts from a two-wheel drive state where the propeller shaft 2 is not rotated to a four-wheel drive state where the rear wheels 105a and 105b are also driven, the ECU 5 increases torque transmitted by the second driving force interruption unit 4 to increase the rotational speed of the propeller shaft 2 and then reduces torque transmitted by the second driving force interruption unit 4, and controls the first driving force interruption unit 3 in a state where the transmitted torque is reduced to thereby bring the first driving force interruption unit 3 into an engaged state. Then, after the ECU 5 determines that the first driving force interruption unit 3 is in the engaged state, the ECU 5 causes the second driving force interruption unit 4 to generate transmitted torque appropriate for the running state.

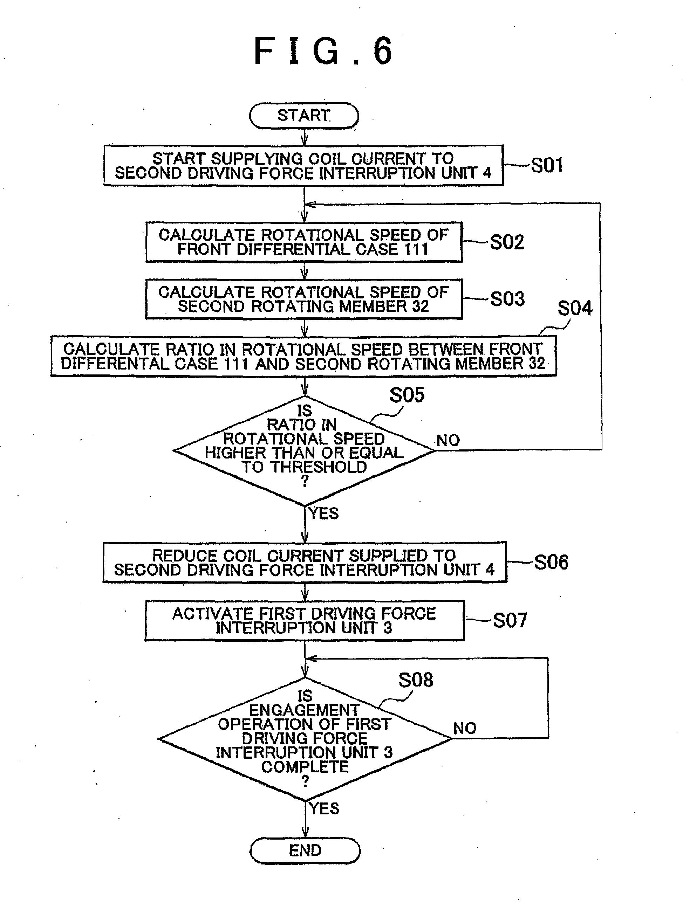

FIG. 6 is a flowchart that shows an example of procedure of the ECU 5 at the time of shifting from a two-wheel drive steady running state to a four-wheel drive state. Note that, in the initial state of process shown in the flowchart, it is assumed that various portions of a driving force transmission system over the second rotating member 32 to the rear differential case 116 do not rotate and a command transmitted torque for the second driving force interruption unit 4 is zero.

At the time of shifting from a two-wheel drive state to a four-wheel drive state, the ECU 5 initially starts supply of coil current to the coil 9a of the second driving force interruption unit 4 (S01). The coil current has a necessary magnitude such that part of torque of the left rear wheel 105a that rotates as the four-wheel drive vehicle 101 1 runs is transmitted to the propeller shaft 2 via the rear differential 107 and the gear mechanism 7 and then the propeller shaft 2 starts rotating.

Subsequently, the ECU 5 calculates the rotational speed of the front differential case 111 on the basis of a value detected by the rotation sensor 15 (S02), and then calculates the rotational speed of the second rotating member 32 on the basis of a value detected by the rotation sensor 16 (S03).

After that, the ECU 5 calculates the ratio of the rotational speed of the second rotating member 32, calculated in step S03, to the rotational speed of the front differential case 111, calculated in step S02 (S04), and then determines whether the ratio is higher than or equal to a predetermined threshold (SO5). The threshold may be, for example, 0.9. In this case, when the second rotating member 32 is rotating at the rotational speed that is 90% or above the rotational speed of the front differential case 111, the result of determination in step S05 is affirmative. Note that the threshold may be set to 0.95.

When the result of determination in step S05 is negative, the ECU 5 repeats the process in step S02 and the following processes.

On the other hand, when the result of determination in step S05 is affirmative, the ECU 5 reduces the coil current of the second driving force interruption unit 4 (S06). More specifically, the ECU 5 reduces the coil current of the second driving force interruption unit 4 to a value that is smaller than or equal to half the coil current at the time when the result of determination in step S05 is affirmative.

Subsequently, the ECU 5 controls the actuator of the first driving force interruption unit 3 to activate the first driving force interruption unit 3 (S07).

After that, the ECU 5 determines whether the engagement operation of the first driving force interruption unit 3 is complete on the basis of the output signal from the proximity sensor 35 (S08). When the result of determination is negative, the determination is repeatedly made; whereas, when the result of determination is affirmative, the process shown in the flowchart ends.

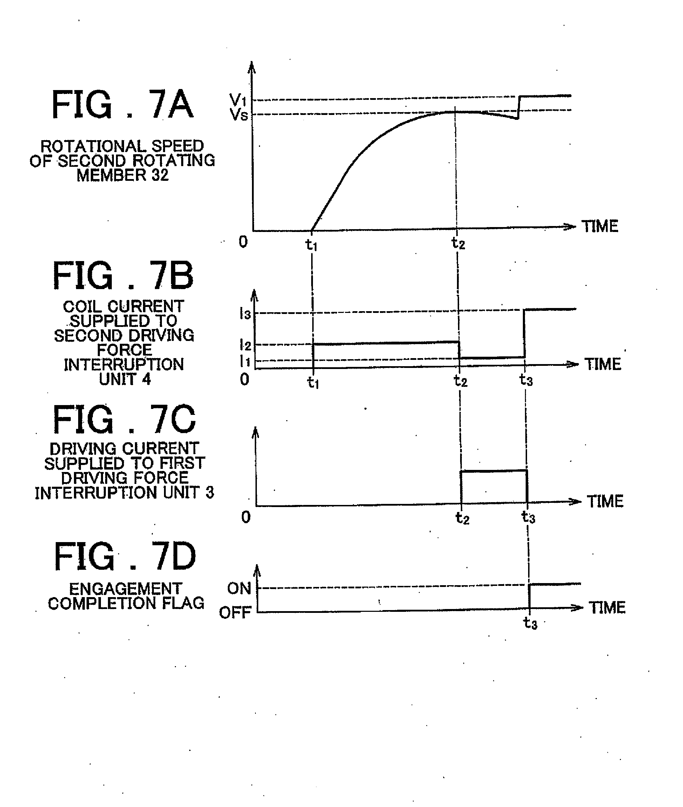

FIG.7A to FIG. 7D are graphs that show temporal changes of various types of signals, or the like, when the ECU 5 executes the process shown in the flowchart of FIG. 6. FIG 7A shows the rotational speed of the second rotating member 32. FIG. 7B shows the coil current of the second driving force interruption unit 4. FIG 7C shows the driving current of the actuator of the first driving force interruption unit 3. FIG. 7D shows an engagement completion flag that indicates that the first driving force interruption unit 3 is in an engaged state.

As shown in FIG. 7A and FIG. 7B, when supply of coil current I₂ to the second driving force interruption unit 4 is started at time t₁, the rotational speed of the second rotating member 32 gradually increases from zero. Then, when the rotational speed of the second rotating member 32 becomes higher than or equal to a threshold Vₛ (V_{S} is, for example, 90% of V₁) lower than the rotational speed V₁, of the front differential case 111 at time t₂, as shown in FIG. 7B and FIG. 7C, the ECU 5 reduces the coil current supplied to the second driving force interruption unit 4 from I₂ to I₁ (I₁ is, for example, 30% of I₂), and supplies driving current to the actuator of the first driving force interruption unit 3.

Then, as shown in FIG. 7D, when the engagement completion flag, which switches between on and off signal statuses on the basis of the output signal from the proximity sensor 35, turns on at time t₃, the ECU 5 stops supply of driving current to the actuator of the first driving force interruption unit 3. Note that it is assumed that the first driving force interruption unit 3 maintains an engaged state even when supply of driving current to the actuator is stopped and enters a released state when inverse driving current is supplied from the ECU 5 to the actuator of the first driving force interruption unit 3.

The ECU 5 supplies coil current I₃ to the second driving force interruption unit 4 in order to distribute driving force, corresponding to the running state of the four-wheel drive vehicle 101, to the rear wheels 105a and 105b after time t₃. I₃ is, for example, a current of a magnitude such that driving force may be equally distributed between the front wheels 104 and 104 and the rear wheels 105a and 105b.

According to the above described third embodiment, the following advantageous effects may be obtained.

When the first driving force interruption unit 3 is in an engaged state, the coil current of the second driving force interruption unit 4 is reduced, so, in comparison with the case where coil current is not reduced, even when the rotational speed of the propeller shaft 2 steeply varies because of engagement of the first driving force interruption unit 3, the shock or vibration is hard to be transmitted to the rear wheel axle shafts 112a and 112b or the rear wheels 105a and 105b. Thus, it is possible to suppress shock or vibration that occurs in the vehicle body of the four-wheel drive vehicle 101.

In addition, when the first driving force interruption unit 3 is in an engaged state, the coil current of the second driving force interruption unit 4 is reduced, so, in comparison with the case where coil current is not reduced, moment of inertia of a driving force transmission member reduces in a torque transmission downstream side with respect to the second rotating member 32 of the first driving force interruption unit 3. Therefore, even when there is a difference in rotation between the first rotating member 31 and the second rotating member 32, the first driving force interruption unit 3 is easily engaged, and it is possible to further quickly shift from a released state to an engaged state. Thus, for example, when a slip occurs in one of the right and left front wheels 104 and 104 or both in a two-wheel drive state, driving force is promptly transmitted to the rear wheels 105a and 105b to enter a four-wheel drive state to thereby make it possible to stabilize running.

In the first and second embodiments, the second driving force interruption unit 4 or 22 is formed of a combined clutch that includes the multiple disk clutch 8, the electromagnetic clutch 9 and the cam mechanism 10; however, the aspect of the invention is not limited to this configuration. For example, the second driving force interruption unit 4 or 22 may be formed of a combined clutch that further includes a pilot clutch in addition to the multiple disk clutch 8, the electromagnetic clutch 9 and the cam mechanism 10.

In the above first and second embodiments, the first driving force interruption unit 3 is formed of a dog clutch; however, the aspect of the invention is not limited to this configuration. The first driving force interruption unit 3 may be formed of a multiple disk clutch.

In the first embodiment, the second driving force interruption unit 4 is arranged only between the left rear wheel axle shaft 112a and the rear differential 107; however, the second driving force interruption unit 4 may be additionally arranged between the right rear wheel axle shaft 112b and the rear differential 107.

In the third embodiment, the coil current I₁ supplied to the second driving force interruption unit 4 between time t₂ and time t₃ shown in FIG. 7A to FIG. 7D is 30% of the coil current I₂ supplied to the second driving force interruption unit 4 between time t₁ and time t₂; however, the configuration is not limited to this. As long as the coil current I₁ is smaller than the coil current I₂ an advantageous effect corresponding to that condition may be obtained. In addition, the coil current I₁ may be zero.

In the third embodiment, the coil current supplied to the second driving force interruption unit 4 between time t₁ and time t₂ is constant; however, the configuration is not limited to this. For example, the coil current may' be gradually increased from time t₁ to time t₂₋ In this case, it is applicable as long as the coil current supplied to the second driving force interruption unit 4 between time t₂ and time t₃ is smaller than a value when the rotational speed of the second rotating member 32 exceeds the threshold V_{S}.

In the third embodiment, the rotational speed of the front differential case 111 (first rotating member 31) is detected by the rotation sensor 15 and the rotational speed of the second rotating member 32 is detected by the rotation sensor 16; however, the configuration is not limited to this. For example, it is applicable that the rotational speed of the propeller shaft 2 is detected and then the detected value is multiplied by the gear ratio of the gear mechanism 6 to compute the rotational speed of the second rotating member 32. In addition, the rotational speed of the first rotating member 31 may be computed by multiplying the rotational speed of the engine 102 by the gear ratio, or the like, of the transmission 103 or may be an average of the front wheel speeds.

In the third embodiment, determination in step S05 shown in FIG. 4 is made on the basis of whether the ratio of the rotational speed of the second rotating member 32 to the rotational speed of the front differential case 111; however, the determination may be made on the basis of whether the difference in rotational. speed between the front differential case 111 and the second rotating member 32 is lower than or equal to a threshold. That is, it is determined whether the difference in rotation between the front differential case 111 and the second rotating member 32 is smaller than or equal to a threshold on the basis of the ratio or difference between the respective rotational speeds, and, when the difference in rotation is smaller than or equal to the threshold, the coil current of the second driving force interruption unit 4 may be reduced and then the first driving force interruption unit 3 may be activated.

While the invention has been described with reference to example embodiments thereof, it is to be understood that the invention is not limited to the described embodiments or constructions. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.
A driving force transmission apparatus (1) includes: a propeller shaft (2) that receives driving force of an engine (102) from a front differential case (111) and transmits the driving force from a front wheel (104) side to a rear wheel (105a, 105b) side; a first driving force interruption unit (3) that connects/disconnects the propeller shaft (2) to/from the front differential case (111); a second driving force interruption unit (4) that connects/disconnects the propeller shaft (2) to/from at least one of the pair of rear wheels (105a, 105b) so that transmitted torque is variable; and an ECU (5) that controls connection and disconnection of the first and second driving force interruption unit (3,4). The ECU (5) causes the second driving force interruption unit (4) to connect/disconnect the propeller shaft (2) to/from the at least one of the pair of rear wheels (105a, 105b) before causing the first driving force interruption unit (3) to connect/disconnect the propeller shaft (2) to/from the front differential case (111).

## Claims

1. A driving force transmission apparatus (1) **characterized by** comprising:
a driving force transmission shaft (2) that receives driving force of a driving source (102) from a rotating member (111) and that transmits the driving force from a side of main driving wheels (104) to a side of auxiliary driving wheels (105a, 105b);
first driving force interruption means (3) for connecting or disconnecting the driving force transmission shaft (2) to or from the rotating member (111) and that is arranged on the main driving wheels (104) side of the driving force transmission shaft (2);
second driving force interruption means (4) for connecting or disconnecting the driving force transmission shaft (2) to or from at least one of the pair of auxiliary driving wheels (105a, 105b) so as to variably transmit torque between the driving force transmission shaft (2) and the at least one of the pair of auxiliary driving wheels (105a, 105b) and that is arranged on the auxiliary driving wheels (105a, 105b) side of the driving force transmission shaft (2); and
control means (5) for controlling connection and disconnection of the first driving force interruption means (3) and second driving force interruption means (4),
wherein the control means (5) causes the second driving force interruption means (4) to connect the driving force transmission shaft (2) to the rotating member (111) before causing the first driving force interruption means (3) to connect the driving force transmission shaft (2) to the at least one of the pair of auxiliary driving wheels (105a, 105b), and causes the second driving force interruption means (4) to disconnect the driving force transmission shaft (2) from the rotating member (111) before causing the first driving force interruption means (3) to disconnect the driving force transmission shaft (2) from the at least one of the pair of auxiliary driving wheels (105a, 105b).

2. The driving force transmission apparatus according to claim 1, wherein:
the second driving force interruption means (4) includes a first interruption element (12) that is connected to the driving force transmission shaft (2) via a differential mechanism (107) and a second interruption element (13) that is connected to one of the
auxiliary driving wheels (105a, 105b); and
the first interruption element (12) and the second interruption element (13) are connected or disconnected to connect or disconnect the driving force transmission shaft (2) to or from the at least one of the pair of auxiliary driving wheels (105a, 105b).

3. The driving force transmission apparatus according to claim 1, wherein:
the second driving force interruption means includes a first interruption element (12) that is connected to the driving force transmission shaft (2) and a second interruption element (13) that is connected to the pair of auxiliary driving wheels via a differential mechanism (107); and
the first interruption element (12) and the second interruption element (13) are connected or disconnected to connect or disconnect the driving force transmission shaft (2) to or from the at least one of the pair of auxiliary driving wheels (105a, 105b).

4. The driving force transmission apparatus according to claim 1, wherein the control means (5) causes the first driving force interruption means (3) to connect the driving force transmission shaft (2) to the rotating member (111) when a difference between the rotational speed of the rotating member (111) and the rotational speed of the driving force transmission shaft (2) is smaller than or equal to a predetermined threshold.

5. driving force transmission apparatus according to claim 1, wherein the control means (5) causes the first driving force interruption means (3) to connect the driving force transmission shaft (2) to the rotating member (111) when a ratio between the rotational speed of the rotating member (111) and the rotational speed of the driving force transmission shaft (2) is higher than or equal to a predetermined threshold.

6. The driving force transmission apparatus according to any one of claims 1 to 5, wherein the control means (5) increases torque transmitted by the second driving force interruption means (4) to increase the rotational speed of the driving force transmission shaft (2) to a predetermined rotational speed and then reduces the torque transmitted by the second driving force interruption means (4), and the control means (5) causes the first driving force interruption means (3) to connect the driving force transmission shaft (2) to the rotating member (111) when the transmitted torque is reduced to a predetermined torque.

7. A control method for controlling a driving force transmission apparatus that includes a driving force transmission shaft (2) that receives driving force of a driving source (102) from a rotating member (111) and that transmits the driving force from a side of main driving wheels (104) to a side of auxiliary driving wheels (105a, 105b), first driving force interruption means (3) for connecting or disconnecting the driving force transmission shaft (2) to or from the rotating member (111) and that is arranged on the main driving wheels (104) side of the driving force transmission shaft (2), and second driving force interruption means (4) for connecting or disconnecting the driving force transmission shaft (2) to or from at least one of the pair of auxiliary driving wheels (105a, 105b) so as to variably transmit torque between the driving force transmission shaft (2) and the at least one of the pair of auxiliary driving wheels (105a, 105b) and that is arranged on the auxiliary driving wheels (105a, 105b) side of the driving force transmission shaft (2), the control method **characterized by** comprising:
causing the second driving force interruption means (4) to connect the driving force transmission shaft (2) to the rotating member (111) before causing the first driving force interruption means (3) to connect the driving force transmission shaft (2) to the at least one of the pair of auxiliary driving wheels (105a, 105b), and causing the second driving force interruption means (4) to disconnect the driving force transmission shaft (2) from the rotating member (111) before causing the first driving force interruption means (3) to disconnect the driving force transmission shaft (2) from the at least one of the pair of auxiliary driving wheels (105a, 105b).

8. The control method according to claim 7, wherein the first driving force interruption means (3) is caused to connect the driving force transmission shaft (2) to the rotating member (111) when a difference between the rotational speed of the rotating member (111) and the rotational speed of the driving force transmission shaft (2) is smaller than or equal to a predetermined threshold.

9. The control method according to claim 7, wherein the first driving force interruption means (3) is caused to connect the driving force transmission shaft (2) to the rotating member (111) when a ratio between the rotational speed of the rotating member (111) and the rotational speed of the driving force transmission shaft (2) is higher than or equal to a predetermined threshold.

10. The control method according to any one of claims 7 to 9, wherein torque transmitted by the second driving force interruption means (4) is increased to increase the rotational speed of the driving force transmission shaft (2) to a predetermined rotational speed and then the torque transmitted by the second driving force interruption means (4) is reduced, and the first driving force interruption means (3) is caused to connect the driving force transmission shaft (2) to the rotating member (111) when the transmitted torque is reduced to a predetermined torque.
